# EUROPÄISCHE PATENTSCHRIFT

(11) **EP 3 278 568 B1**
(45) Veröffentlichungstag und Bekanntmachung des Hinweises auf die Patenterteilung: **02.12.2020**
(21) Anmeldenummer: 16709763.3
(22) Anmeldetag: 10.03.2016
(51) Int. Cl.: H04Q 1/02

(54) **SCHALTSCHRANK MIT VERBESSERTER FUNKÜBERTRAGUNG ZWISCHEN MESSSENSOREN UND EINER BASISSTATION**
SCHALTSCHRANK MIT VERBESSERTER FUNKÜBERTRAGUNG ZWISCHEN MESSSENSOREN UND EINER BASISSTATION
ARMOIRE ÉLECTRIQUE À RADIOTRANSMISSION AMÉLIORÉE ENTRE DES CAPTEURS DE MESURE ET UNE STATION DE BASE

(30) Priorität: 31.03.2015 DE 102015104922
(43) Veröffentlichungstag der Anmeldung: 07.02.2018
(73) Patentinhaber: Eaton Intelligent Power Limited, Dublin 4 (IE)
(72) Erfinder: REUBERGER, Georg, 3931 Schweiggers (AT)
(74) Vertreter: Eaton IP Group EMEA
(86) Internationale Anmeldenummer: PCT/EP2016/055176
(87) Internationale Veröffentlichungsnummer: WO 2016/156005

(56) Entgegenhaltungen:
- CN-U- 202 903 365
- DE-A1-102006 011 127

## Beschreibung

### TECHNISCHES GEBIET

Die Erfindung betrifft einen Schaltschrank, welcher mehrere Schaltgeräte umfasst, mehrere damit verbundene elektrische Leiter, sowie eine Basisstation zum Empfang drahtloser Signale in einem ersten Bereich des Schaltschranks. Zudem weist der Schaltschrank mehrere, in einem zweiten Bereich des Schaltschranks auf den elektrischen Leitern angeordnete Sensoren auf, welche für die drahtlose Übertragung eines Messwerts für einen durch den Leiter fließenden Strom und/oder eines Messwerts für eine Temperatur des Leiters zu der Basisstation eingerichtet sind.

### STAND DER TECHNIK

Ein solcher Schaltschrank ist grundsätzlich bekannt. Beispielsweise offenbart die DE 10 2006 011 127 A1 in diesem Zusammenhang eine Schaltschrankanordnung mit zumindest einem Schaltschrank und einer Überwachungseinrichtung, die zur Überwachung schaltschrankspezifischer Zustandsgrößen einschließlich Temperatur, Feuchte, Zugang, Vibration, Rauch, Strom und/oder Spannung ausgebildet ist. Die Schaltschranküberwachungseinrichtung weist eine im Schaltschrank angeordnete zentrale Überwachungs- und Steuerungskomponente auf, welche mit entsprechenden Sensoren und ansteuerbaren Aktoren und/oder Meldeeinheiten in Verbindung ist. Die zentrale Überwachungs- und Steuerungskomponente ist dabei als Basisstation mit einer drahtlosen Sende-/Empfangsschnittstelle ausgebildet, und die Sensoren sind mit einer drahtlosen Sende- und/oder Empfangsschnittstelle zur drahtlosen Datenübertragung zwischen den Sensoren und der Basisstation ausgestattet.

Nachteilig ist an diesem Schaltschrank, dass dieser für die Funkübertragung zwischen den genannten Sensoren und der Basisstation im Inneren völlig offen ist. Bei Öffnen einer Schaltschranktür oder Demontage einer Schaltschrankwand besteht daher grundsätzlich die Gefahr eines elektrischen Schlags. Der Schaltschrank kann daher im Wesentlichen nur von geschultem Personal bedient werden. Zudem sind im Inneren des Schaltschranks Antennen verbaut, welche eine Isolationsstrecke zwischen zwei blanken Leitern auf unterschiedlichem Spannungsniveau nachteilig beeinflussen können. Zudem besteht grundsätzlich die Gefahr, dass über die Antenne und/oder eine daran angeschlossene Verkabelung eine gefährliche Spannung aus dem Schaltschrank herausgeführt wird, wenn die Isolation zwischen der Antenne / Antennenverkabelung und den im Schaltschrank verbauten, blanken Stromleitern nicht mehr gegeben sein sollte. Situationen mit potentieller Gefahr für Mensch und Maschine sind die Folge.

### OFFENBARUNG DER ERFINDUNG

Eine Aufgabe der Erfindung ist es daher, einen verbesserten Schaltschrank anzugeben. Insbesondere soll sowohl hohe Betriebssicherheit als auch gute Funkübertragung zwischen den genannten Sensoren und der Basisstation erreicht werden.

Die Aufgabe der Erfindung wird mit einem Schaltschrank der eingangs genannten Art gelöst, der zusätzlich zumindest eine metallene Trennwand aufweist, welche den ersten Bereich vom zweiten Bereich abtrennt und welche im betriebsbereiten Schaltschrank ausschließlich frei bleibende Öffnungen aufweist, in welche ein Inkreis mit einem Durchmesser von maximal 11,5 mm einschreibbar ist.

Durch die vorgeschlagenen Maßnahmen ist der Betrieb des Schaltschranks besonders sicher, da zwischen dem ersten Bereich mit der Basisstation und dem zweiten Bereich, in dem die Sensoren und die elektrischen Leiter angeordnet sind, eine Trennwand vorgesehen wird. Gleichzeitig wird wegen der angegeben Öffnungen auch eine gute Signalübertragung zwischen den Sensoren und der Basisstation erreicht.

Im Rahmen der Erfindung ist unter einem "fertigen/betriebsbereiten Schaltschrank" ein Schaltschrank zu verstehen, für den alle Montageschritte abgeschlossen sind. Dieser ist nicht notwendigerweise an einem Betriebsort aufgestellt und auch nicht notwendigerweise mit einer externen Verkabelung verbunden. Es ist ausreichend, wenn der Schaltschrank für die genannte Aufstellung und den genannten externen Anschluss bereit ist.

"Freibleibende Öffnungen" sind Öffnungen in Bauteilen, die während der Montage des Schaltschranks nicht (dauerhaft) verschlossen werden. Typischerweise sind freibleibende Öffnungen zum Beispiel Lüftungsöffnungen sowie die oben angegebene Öffnung für die Signalübertragung zwischen den Sensoren und der Basisstation.

"Nicht freibleibende Öffnungen" sind demzufolge Öffnungen in Bauteilen, die bei der Montage des Schaltschranks und zur Erlangung eines betriebsbereiten Schaltschranks durch andere Bauteile verschlossen werden. Nicht freibleibende Öffnungen sind typischerweise beispielsweise Schraublöcher, Durchführungen für Kabel und dergleichen.

Weitere vorteilhafte Ausgestaltungen und Weiterbildungen der Erfindung ergeben sich aus den Unteransprüchen sowie aus der Beschreibung in Zusammenschau mit den Figuren.

Vorteilhaft ist es, wenn blanke Leiter ausschließlich im zweiten Bereich angeordnet sind und der erste Bereich normfingersicher gemäß IPXXB / IEC61439 ist. Auf diese Weise ist der Schaltschrank besonders betriebssicher, gleichzeitig wird eine gute Datenübertragung zwischen den Sensoren und der Basisstation gewährleistet.

Vorteilhaft ist es zudem, wenn in der genannten Trennwand als freibleibende Öffnung ein Schlitz mit einer Breite von maximal 11,5 mm und einer Länge von mindestens 300 mm angeordnet ist, insbesondere nur ein solcher Schlitz. Schlitzförmige Öffnungen haben sich bei Versuchen als besonders tauglich für eine Funkübertragung zwischen den Sensoren und der Basisstation herausgestellt.

Vorteilhaft ist es darüber hinaus, wenn der Schlitz zumindest 2 mm breit ist. Diese Breite hat sich bei Versuchen als Untergrenze für eine sichere Datenübertragung zwischen den Sensoren und der Basisstation herausgestellt. Im Speziellen ist es von Vorteil, wenn der Schlitz im Wesentlichen 2 mm breit ist, da dadurch sowohl sehr hohe Berührsicherheit als auch gute Funkübertragung gegeben sind.

Günstig ist es, wenn der Schlitz aus der metallenen Trennwand ausgestanzt ist. Auf diese Weise kann die Trennwand rationell hergestellt werden. Denkbar sind aber auch andere Herstellungsverfahren, wie zum Beispiel Fräsen, Brennschneiden oder Laserschneiden.

Besonders vorteilhaft ist es, wenn die Trennwand mehrteilig aufgebaut ist und zumindest zwei Trennwand-Teile im Schaltschrank so zueinander beabstandet angeordnet sind, dass sich ein Schlitz der genannten Art ergibt. Durch die vorgeschlagenen Maßnahmen kann ein Schlitz einer gewünschten Breite auf vergleichsweise einfache Weise realisiert werden. Insbesondere eignet sich diese Variante der Herstellung für die Nachrüstung bestehender Schaltschränke mit den genannten Sensoren und der Basisstation. Der Schaltschrank kann einfach dadurch "funktauglich" gemacht werden, dass die Teile einer mehrteiligen Trennwand gelockert und voneinander beabstandet wieder befestigt werden. Besonders vorteilhaft ist dabei, dass bei dieser Art der Herstellung keine metallischen Späne entstehen, welche unter Umständen einen Kurzschluss an den im zweiten Bereich verlaufenden blanken Stromleitern oder eine Verminderung von Kriechstrecken verursachen könnten. Die genannten Späne könnten auch die Funktion mechanischer Komponenten beeinträchtigen. Beispielsweise können Späne zum Klemmen von Verriegelungen, Schlössern oder (elektromechanischen) Schaltern führen.

Besonders vorteilhaft ist es in obigem Zusammenhang auch, wenn die metallische Trennwand Langlöcher aufweist, welche quer zum dem genannten Schlitz angeordnet sind, und die metallische Trennwand mit Hilfe von Schrauben an einem Rahmen des Schaltschranks montiert ist. Auf diese Weise kann ein Schlitz einer gewünschten Breite auf einfache Weise realisiert werden.

Vorteilhaft ist es zudem, wenn Antennen zur Funkübertragung innerhalb des zweiten Bereichs ausschließlich in oder auf den Sensoren angeordnet sind. Besonders vorteilhaft ist es weiterhin, wenn Antennen zur Funkübertragung innerhalb des Schaltschranks ausschließlich in oder auf den Sensoren sowie in oder auf der Basisstation angeordnet sind. Insbesondere durch Verzicht von weiteren Antennen im zweiten Bereich ist der Schaltschrank besonders betriebssicher, da eine Isolationsstrecke zwischen den blanken Stromleiteren im zweiten Bereich nicht durch eine Antenne und deren Verbindungsteile / Verbindungsleitungen beeinflusst wird. Desweiteren kann durch die (nicht vorhandene) Antenne auch keine gefährliche Spannung aus dem Schaltschrank herausgeführt werden, so wie dies im Stand der Technik der Fall sein kann, wenn eine Isolation zwischen einer solchen Antenne und den Stromleitern aus irgendeinem Grund nicht mehr gegeben sein sollte.

Günstig ist es auch, wenn der erste Bereich einem ersten, im Wesentlichen quaderförmigen, Schaltschrankabteil und der zweite Bereich einem zweiten, im Wesentlichen quaderförmigen Schaltschrankabteil, zugeordnet ist und das zweite Schrankabteil in horizontaler Richtung an das erste Schrankabteil angereiht ist. Auf diese Weise gestaltet sich der Aufbau des Schaltschranks vergleichsweise einfach.

Günstig ist es schließlich in obigem Zusammenhang, wenn sich der Schlitz über zumindest 80% der Breite und/oder Höhe eines Verbindungsbereichs zwischen dem ersten Bereich und dem zweiten Bereich erstreckt. Auf diese Weise wird ebenfalls eine gute Funkübertragung zwischen den genannten Sensoren und der Basisstation erreicht.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Fig. 1: eine Seitenansicht eines beispielhaften und schematisch dargestellten Schaltschranks;
- Fig. 2: den Schaltschrank aus Fig. 1 in Vorderansicht;
- Fig. 3: den Schaltschrank aus Fig. 1 im Schnitt;
- Fig. 4: ein Beispiel für eine mehrteilig aufgebaute Trennwand;
- Fig. 5: eine Öffnung in der Trennwand im Detail;
- Fig. 6: eine Beispiel für eine konkret ausgeführte Trennwand in einem Schaltschrank und
- Fig. 7: ein weiteres Beispiel für eine konkret ausgeführte Trennwand in einem Schaltschrank.

### DETAILIERTE BESCHREIBUNG DER ERFINDUNG

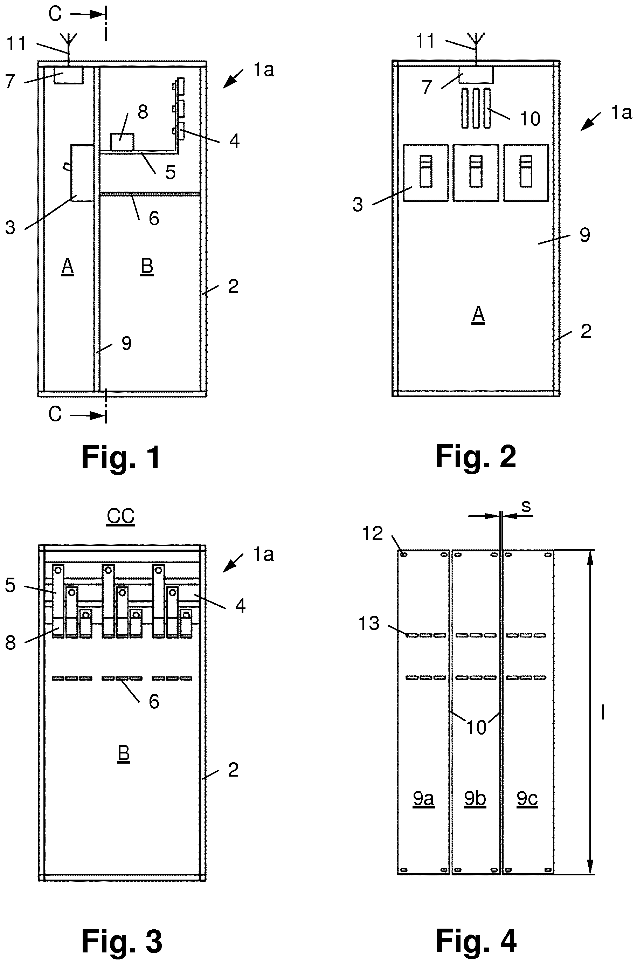

Die Figuren 1 bis 3 zeigen ein erstes Beispiel eines vereinfacht dargestellten Schaltschranks 1a. Die Fig. 1 zeigt den Schaltschrank 1a in Seitenansicht, die Fig. 2 in Vorderansicht und die Fig. 3 einen Schnitt in der Ebene CC. Um den Blick in das Innere des Schaltschranks 1a freizugeben, sind die Wände des Schaltschranks 1a abgenommen respektive durchsichtig dargestellt. In der Realität sind die Wände des Schaltschranks 1a jedoch in der Regel mit Blechwänden verkleidet.

Der Schaltschrank 1a umfasst einen Rahmen 2, mehrere Schaltgeräte 3, mehrere damit verbundene elektrische Leiter 4..6 sowie eine Basisstation 7 zum Empfang drahtloser Signale in einem ersten Bereich A des Schaltschranks 1a. Die elektrischen Leiter 4 sind dabei als Stromschienen ("bus bars") ausgebildet, die elektrischen Leiter 5 als Verbindungen zwischen dem Schaltgerät 3 und den Stromschienen 4 und die elektrischen Leiter 6 als Verbindungen zu einem Ausgang des Schaltschranks 1a. Die elektrischen Leiter 4..6 können insbesondere einem Dreiphasensystem mit den Phasen L1, L2 und L3 zugeordnet sein. Selbstverständlich kann auch ein Nullleiter N vorhanden sein.

Zusätzlich zu den bereits genannten Baueinheiten umfasst der Schaltschrank 1a mehrere in einem zweiten Bereich B des Schaltschranks 1a auf den elektrischen Leitern 5 angeordnete Sensoren 8, welche für die drahtlose Übertragung eines Messwerts für einen durch den Leiter 5 fließenden Strom und/oder eines Messwerts für eine Temperatur des Leiters 5 zu der Basisstation 7 eingerichtet sind. Außerdem weist der Schaltschrank 1a eine metallene Trennwand 9 auf, welche den ersten Bereich A vom zweiten Bereich B abtrennt und welche im betriebsbereiten Schaltschrank 1a ausschließlich frei bleibende Öffnungen 10 aufweist, in welche ein Inkreis mit einem Durchmesser d von maximal 11,5 mm einschreibbar ist.

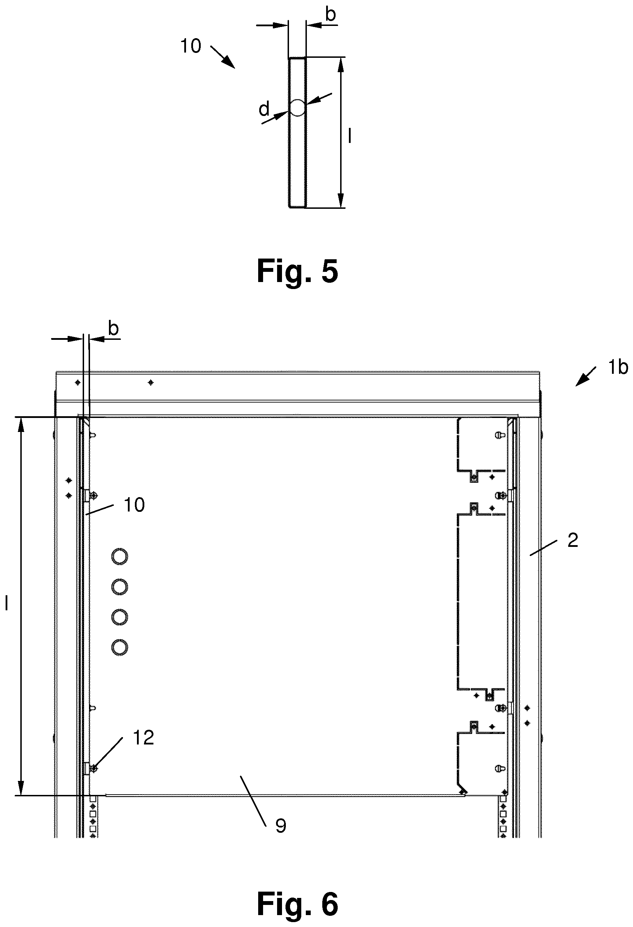

Fig. 5 zeigt dazu eine der Öffnungen 10 in vergrößerter Darstellung. Die (in diesem Beispiel schlitzförmige) Öffnung 10 weist eine Breite b und eine Länge I auf. In die Öffnung 10 ist ein Inkreis mit dem Durchmesser d einschreibbar.

Schließlich umfasst der Schaltschrank 1a auch eine externe, aus dem Gehäuse des Schaltschranks 1a herausgeführte Antenne 11, die mit der Basisstation 7 verbunden ist.

Günstig ist es, wenn - wie in den Figuren 1 bis 3 dargestellt - der erste Bereich A einem ersten, im Wesentlichen quaderförmigen, Schaltschrankabteil und der zweite Bereich B einem zweiten, im Wesentlichen quaderförmigen Schaltschrankabteil, zugeordnet ist und das zweite Schrankabteil in horizontaler Richtung an das erste Schrankabteil angereiht ist. Dadurch ergibt sich ein günstiger Aufbau des Schaltschranks 1a.

Mit den Schaltgeräten 3 können in an sich bekannter Weise Lasten an die Stromschienen 4 geschaltet werden. Mit Hilfe der Sensoren 8 wird ein Strom durch die Leiter 5 und/oder eine Temperatur der Leiter 5 drahtlos an die Basisstation 7 gesendet. Diese kann basierend auf den empfangenen Messwerten verschiedene Aktionen ausführen, zum Beispiel Aktoren ansteuern, Schalter ansteuern und/oder die empfangenen Messwerte mit Hilfe der externen Antenne 11 an eine übergeordnete Leitstation melden (nicht dargestellt). Die Datenübertragung kann dabei beispielsweise über Mobilfunk erfolgen.

Vorteilhaft ist es nun, wenn - wie in den Figuren 1 bis 3 dargestellt - blanke Leiter 4..6 ausschließlich im zweiten Bereich B angeordnet sind und der erste Bereich normfingersicher gemäß IPXXB / IEC61439 ist. Der Betrieb des Schaltschranks 1a ist daher besonders sicher und die Bedienung auch für weniger oder nicht geschulte Personen möglich. Um die Datenübertragung zwischen den Sensoren 8 und der Basisstation 7 dennoch zu gewährleisten, sind - wie bereits vorgeschlagen - Öffnungen 10 in der Trennwand 9 angeordnet. Grundsätzlich können die Öffnungen 10 beliebig geformt sein, also zum Beispiel bogenförmig, S-förmig oder dergleichen, solange der größte einschreibbare Inkreis einen Durchmesser d von maximal 11,5 mm aufweist.

Besonders vorteilhaft ist es jedoch, wenn die Öffnung, wie im dargestellten Beispiel, schlitzförmig ausgebildet ist. Besonders vorteilhaft ist es in diesem Zusammenhang auch, wenn der Schlitz eine Breite b von maximal 11,5 mm und eine Länge l von mindestens 300 mm aufweist. Versuche haben ergeben, dass sich schlitzförmige Öffnungen 10 besonders gut für die störungsfreie Funkübertragung zwischen der Basisstation 7 und den Sensoren 8 eignen, wobei die Funkübertragung umso besser erfolgen kann, je länger der Schlitz 10 ist. Als vorteilhafte Untergrenze werden, wie erwähnt, 300 mm für die Länge l angegeben. Besonders vorteilhaft ist es auch, wenn der Schlitz zumindest 2 mm breit ist, da sich dann ein weitgehend störungsfreier Betrieb der Basisstation 7 und der Sensoren 8 realisieren lässt.

In dem gezeigten Beispiel sind drei Schlitze 10 angeordnet, denkbar wäre aber auch eine davon abweichende Anzahl von Schlitzen 10. Insbesondere kann auch nur ein Schlitz 10 in der Trennwand 9 angeordnet sein. Desweiteren wird angemerkt, dass die Schlitze 10 auch anders als dargestellt orientiert sein können, auch wenn sich eine vertikale Ausrichtung derselben als vorteilhaft herausgestellt hat. Insbesondere können die Schlitze 10 horizontal, schräg oder auch unterschiedlich orientiert sein.

Für das obige Beispiel wird angenommen, dass die Schlitze 10 aus der metallenen Trennwand 9 ausgestanzt sind. Denkbar wäre beispielsweise auch, dass die Schlitze 10 gefräst oder mittels Brennschneidverfahren oder Laserschneidverfahren hergestellt sind. Besonders vorteilhaft ist es jedoch auch wenn die Trennwand 9 mehrteilig aufgebaut ist und zumindest zwei Teile der Trennwand 9 im Schaltschrank 1a so zueinander beabstandet angeordnet sind, dass sich ein

Schlitz 10 der genannten Art ergibt. Auf diese Weise können insbesondere bestehende Schaltschränke 1a nachträglich "funktauglich" gemacht werden, indem die Teile der Trennwand 9 gelockert, etwas auseinandergeschoben und schließlich wieder befestigt werden. Vorteilhaft entstehen bei dieser Herstellungsart keine metallischen Späne, die - wenn sie nicht gründlich entfernt werden - unter Umständen einen Kurzschluss oder eine Verminderung von Kriechstrecken im Schaltschrank 1a verursachen können. Darüber hinaus ist durch Späne auch eine negative Beeinflussung mechanischer Komponenten zu befürchten. Beispielsweise können Späne zum Klemmen von Verriegelungen, Schlössern oder (elektromechanischen) Schaltern führen.

Die Fig. 4 zeigt dazu ein Beispiel einer Trennwand, die aus den drei Teilen 9a, 9b und 9c zusammengesetzt ist. Die genannten Teile 9a..9c sind zueinander horizontal beabstandet, sodass sich zwei vertikal verlaufende Schlitze 10 mit einer Breite s und einer Länge l ergeben. Im gezeigten Beispiel erstrecken sich die Schlitze 10 über die gesamte Höhe des Schaltschranks 1a. Dies ist zwar vorteilhaft, jedoch nicht zwingend. Die Schlitze 10 könnten auch kürzer ausfallen.

Zur Befestigung der Trennwand-Teile 9a..9c weisen diese Langlöcher 12 auf, welche quer zu den genannten Schlitzen 10 angeordnet sind. Mit Hilfe von Schrauben, welche durch die Langlöcher 12 gesteckt werden, kann die metallische Trennwand 9a..9c dann am Rahmen 2 des Schaltschranks 1a montiert sein. Dadurch kann auf vergleichsweise einfache Weise eine gewünschte Breite s der Schlitze 10 eingestellt werden.

Aus der Fig. 4 geht insbesondere hervor, dass die Trennwand 9a..9c neben den Öffnungen 10 auch weitere Öffnungen aufweisen kann. Konkret sind die bereits erwähnten Langlöcher 12 sowie Durchbrüche 13 für die Stromleiter 5 und 6 vorgesehen. Bei letzteren handelt es ich um Öffnungen 12, 13 die im betriebsbereiten Schaltschrank 1a nicht frei bleiben, sondern eben mit Schrauben, beziehungsweise (unter Zuhilfenahme eines Isolators) mit den Stromleitern 5 und 6 "verschlossen" werden. Ein weiteres Beispiel für eine nicht freibleibende Öffnung, wäre zum Beispiel auch eine (runde) Ausnehmung für die Durchführung eines Kabels. Die einzigen in der Trennwand 9a..9c nach Fig. 4 im betriebsbereiten Schaltschrank 1a freibleibenden Öffnungen sind somit die Schlitze 10. Denkbar wäre natürlich auch, dass weitere freibleibende Öffnungen in der Trennwand 9a..9c vorgesehen sind, in die ein Inkreis mit einem Durchmesser d von maximal 11,5 mm einschreibbar ist, beispielsweise Lüftungsbohrungen.

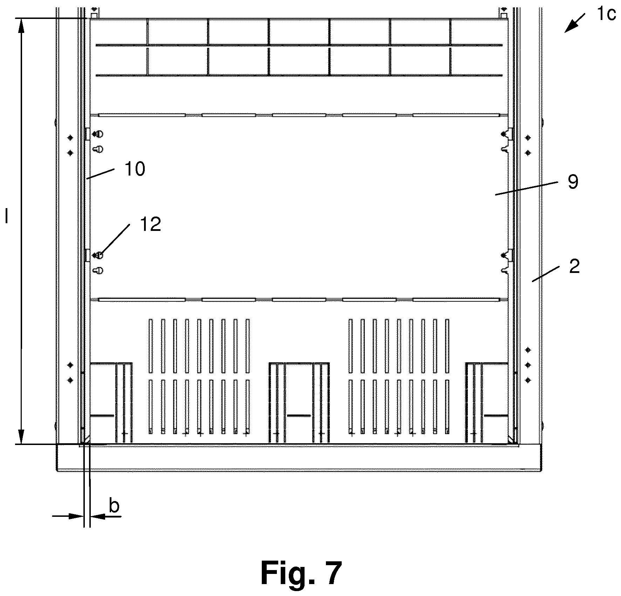

Ergänzend zeigt die Fig. 6 nun einen Ausschnitt eines Schaltschranks 1b aus dessen oberen Bereich mit einem Beispiel für eine konkret ausgeführte Trennwand 9. Die Fig. 7 zeigt zusätzlich einen Ausschnitt eines Schaltschranks 1c aus dessen unteren Bereich mit einem weiteren Beispiel für eine konkret ausgeführte Trennwand 9.

Gut erkennbar ist aus beiden Figuren 6 und 7, dass neben den vertikal verlaufenden Schlitzen 10 mit der Länge l und der Breite b und den Langlöchern 12 auch weitere Öffnungen vorhanden sein können. Insbesondere wird angemerkt, dass die Langlöcher 12 - wie in den Figuren 6 und 7 dargestellt - auch einseitig offen sein können.

Durch die vorgeschlagenen Maßnahmen wird gleichzeitig sowohl die Fingersicherheit des Schaltschranks 1a..1c als auch die Signalübertragung zwischen den Sensoren 8 und der Basisstation 7 gewährleistet. Insbesondere ist es daher auch möglich und von Vorteil, wenn Antennen zur Funkübertragung innerhalb des Schaltschranks 1a..1c ausschließlich in oder auf den Sensoren 8 sowie in oder auf der Basisstation 7 angeordnet sind. Insbesondere durch Verzicht von weiteren Antennen im Bereich B ist der Schaltschrank 1a..1c besonders sicher, da eine Isolationsstrecke zwischen den blanken Stromleiteren 4..6 nicht durch eine Antenne oder deren Verbindungsteile / Verbindungskabel beeinflusst wird. Desweiteren kann durch die (nicht vorhandene) Antenne auch keine gefährliche Spannung aus dem Schaltschrank 1a..1c herausgeführt werden, so wie dies im Stand der Technik der Fall sein kann, wenn eine Isolation zwischen einer solchen Antenne und den Stromleitern 4..6 aus irgendeinem Grund nicht mehr gegeben sein sollte.

Abschließend wird angemerkt, dass der Schaltschrank 1a..1c respektive dessen Bauteile nicht notwendigerweise maßstäblich dargestellt ist/sind und dieser/diese daher auch andere Proportionen aufweisen kann/können. Weiterhin kann der Schaltschrank 1a..1c auch mehr oder weniger Bauteile als dargestellt umfassen. Lageangaben (z.B. "oben", "unten", "links", "rechts", etc.) sind auf die jeweils beschriebene Figur bezogen und sind bei einer Lageänderung sinngemäß an die neue Lage anzupassen. Schließlich wird angemerkt, dass sich die obigen Ausgestaltungen und Weiterbildungen der Erfindung auf beliebige Art und Weise kombinieren lassen.

## Patentansprüche

1. Schaltschrank (1a..1c), umfassend
- mehrere Schaltgeräte (3),
- mehrere damit verbundene elektrische Leiter (4..6),
- eine Basisstation (7) zum Empfang drahtloser Signale in einem ersten Bereich (A) des Schaltschranks (1a..1c) und
- mehrere auf den elektrischen Leitern (4..6) angeordnete Sensoren (8), welche für die drahtlose Übertragung eines Messwerts für einen durch den Leiter (5) fließenden Strom und/oder eines Messwerts für eine Temperatur des Leiters (5) zu der Basisstation (7) eingerichtet sind, in einem zweiten Bereich (B) des Schaltschranks (1a..1c),
**gekennzeichnet durch**
- zumindest eine metallene Trennwand (9, 9a..9c), welche den ersten Bereich (A) vom zweiten Bereich (B) abtrennt und welche im betriebsbereiten
Schaltschrank (1a..1c) ausschließlich frei bleibende Öffnungen (10) aufweist, in welche ein Inkreis mit einem Durchmesser (d) von maximal 11,5 mm einschreibbar ist.

2. Schaltschrank (1a..1c) nach Anspruch 1, **dadurch gekennzeichnet, dass** blanke Leiter (4..6) ausschließlich im zweiten Bereich (B) angeordnet sind und der erste Bereich (A) normfingersicher gemäß IPXXB / IEC61439 ist.

3. Schaltschrank (1a..1c) nach Anspruch 1 oder 2, **dadurch gekennzeichnet, dass** in der genannten Trennwand (9, 9a..9c) als freibleibende Öffnung (10) ein Schlitz mit einer Breite(b) von maximal 11,5 mm und einer Länge (l) von mindestens 300 mm angeordnet ist.

4. Schaltschrank (1a..1c) nach Anspruch 3, **dadurch gekennzeichnet, dass** der Schlitz (10) zumindest 2 mm breit ist.

5. Schaltschrank (1a..1c) nach Anspruch 3 oder 4, **dadurch gekennzeichnet, dass** der Schlitz (10) aus der metallenen Trennwand (9, 9a..9c) ausgestanzt ist.

6. Schaltschrank (1a..1c) nach Anspruch 3 oder 4, **dadurch gekennzeichnet, dass** die Trennwand (9, 9a..9c) mehrteilig aufgebaut ist und zumindest zwei Trennwand-Teile (9a..9c) im Schaltschrank (1a..1c) so zueinander beabstandet angeordnet sind, dass sich ein Schlitz (10) der genannten Art ergibt.

7. Schaltschrank (1a..1c) nach Anspruch 6, **dadurch gekennzeichnet, dass** die metallische Trennwand (9, 9a..9c) Langlöcher (12) aufweist, welche quer zum dem genannten Schlitz (10) angeordnet sind, und die metallische Trennwand (9, 9a..9c) mit Hilfe von Schrauben an einem Rahmen (2) des Schaltschranks (1a..1c) montiert ist.

8. Schaltschrank (1a..1c) nach einem der Ansprüche 1 bis 7, **dadurch gekennzeichnet, dass** Antennen zur Funkübertragung innerhalb des zweiten Bereichs (B) ausschließlich in oder auf den Sensoren (8) angeordnet sind.

9. Schaltschrank (1a..1c) nach Anspruch 8, **dadurch gekennzeichnet, dass** Antennen zur Funkübertragung innerhalb des Schaltschranks (1a..1c) ausschließlich in oder auf den Sensoren (8) sowie in oder auf der Basisstation (7) angeordnet sind.

10. Schaltschrank (1a..1c) nach einem der Ansprüche 1 bis 9, **dadurch gekennzeichnet, dass** der erste Bereich (A) einem ersten, im Wesentlichen quaderförmigen, Schaltschrankabteil und der zweite Bereich (B) einem zweiten, im Wesentlichen quaderförmigen Schaltschrankabteil, zugeordnet ist und das zweite Schrankabteil in horizontaler Richtung an das erste Schrankabteil angereiht ist.

11. Schaltschrank (1a..1c) nach Anspruch 10, **dadurch gekennzeichnet, dass** sich der Schlitz (10) über zumindest 80% der Breite und/oder Höhe eines Verbindungsbereichs zwischen dem ersten Bereich (A) und dem zweiten Bereich (B) erstreckt.

## Claims

1. Switching cabinet (la..lc), comprising
- a plurality of switching devices (3),
- a plurality of electrical conductors (4..6) connected therewith,
- a base station (7) for receiving wireless signals in a first region (A) of the switching cabinet (1a..1c) and
- a plurality of sensors (8) arranged on the electrical conductors (4..6), which sensors are configured for the wireless transmission to the base station (7) of a measurement value for a current flowing through the conductor (5) and/or a measurement value for a temperature of the conductor (5), in a second region (B) of the switching cabinet (la..lc),
**characterised by**
- at least one metallic partition wall (9, 9a..9c) which separates the first region (A) from the second region (B) and which in the ready-to-operate switching cabinet (la..lc) has openings (10) remaining exclusively free, in which an incircle with a diameter (d) of maximum 11.5 mm can be inscribed.

2. Switching cabinet (1a..1c) according to claim 1, **characterised in that** bare conductors (4..6) are arranged exclusively in the second region (B) and the first region (A) is standard finger-safe according to IPXXB / IEC61439.

3. Switching cabinet (1a..1c) according to claim 1 or 2, **characterised in that** a slot with a width (b) of maximum 11.5 mm and a length (I) of at least 300 mm is arranged as a free opening (10) in the mentioned partition wall (9, 9a..9c).

4. Switching cabinet (1a..1c) according to claim 3, **characterised in that** the slot (10) is at least 2 mm wide.

5. Switching cabinet (1a..1c) according to claim 3 or 4, **characterised in that** the slot (10) is punched out of the metallic partition wall (9, 9a..9c).

6. Switching cabinet (1a..1c) according to claim 3 or 4, **characterised in that** the partition wall (9, 9a..9c) is constructed in multiple parts and at least two partition wall parts (9a..9c) in the switching cabinet (1a..1c) are arranged spaced from one another such that a slot (10) of the mentioned sort results.

7. Switching cabinet (1a..1c) according to claim 6, **characterised in that** the metallic partition wall (9, 9a..9c) has elongated holes (12) which are arranged transversely to the mentioned slot (10), and the metallic partition wall (9, 9a..9c) is mounted with the aid of screws to a frame (2) of the switching cabinet (1a..1c).

8. Switching cabinet (1a..1c) according to any of claims 1 to 7, **characterised in that** antennae for radio transmission within the second region (B) are arranged exclusively in or on the sensors (8).

9. Switching cabinet (1a..1c) according to claim 8, **characterised in that** antennae for radio transmission within the switching cabinet (1a.. 1c) are arranged exclusively in or on the sensors (8) or in or on the base station (7).

10. Switching cabinet (1a..1c) according to any of claims 1 to 9, **characterised in that** the first region (A) is assigned to a first substantially cuboidal switching cabinet compartment and the second region (B) is assigned to a second substantially cuboidal switching cabinet compartment and the second cabinet compartment is lined up in horizontal direction with the first cabinet compartment.

11. Switching cabinet (1a..1c) according to claim 10, **characterised in that** the slot (10) extends across at least 80% of the width and/or height of a connecting region between the first region (A) and the second region (B).

## Revendications

1. Armoire électrique (1a., 1c), comprenant
- plusieurs appareils de commutation (3),
- plusieurs conducteurs électriques (4.. 6) reliés à ceux-ci,
- une station de base (7) pour recevoir des signaux sans fil dans une première zone (A) de l'armoire électrique (1a.. 1c) et
- plusieurs capteurs (8) agencés sur les conducteurs électriques (4.. 6), qui sont utilisés pour la transmission sans fil d'une valeur de mesure d'un courant circulant à travers le conducteur (5) et/ou d'une valeur de mesure d'une température du conducteur (5) à la station de base (7) dans une seconde zone (B) de l'armoire électrique (1a.. 1c), **caractérisée par**
- au moins une paroi de séparation métallique (9, 9a.. 9c) qui sépare la première zone (A) de la seconde zone (B) et qui présente des ouvertures restant libres (10) exclusivement dans l'armoire électrique en état de service (1a.. 1c), où un cercle d'un diamètre (d) d'un maximum de 11,5 mm peut être inscrit.

2. Armoire électrique (1a.. 1c) selon la revendication 1, **caractérisée en ce que** des conducteurs dénudés (4.. 6) sont agencés exclusivement dans la seconde zone (B) et la première zone (A) est sécurisée pour les doigts conformément à IPXXB/IEC61439.

3. Armoire électrique (1a.. 1c) selon la revendication 1 ou 2, **caractérisée en ce que** dans ladite paroi de séparation (9, 9a.. 9c), en tant qu'ouverture libre (10), est agencée une fente d'une largeur (b) d'un maximum de 11,5 mm et d'une longueur (l) d'au moins 300 mm.

4. Armoire électrique (1a.. 1c) selon la revendication 3, **caractérisée en ce que** la fente (10) a une largeur d'au moins 2 mm.

5. Armoire électrique (1a.. 1c) selon la revendication 3 ou 4, **caractérisée en ce que** la fente (10) est découpée dans la paroi de séparation métallique (9, 9a.. 9c).

6. Armoire électrique (1a.. 1c) selon la revendication 3 ou 4, **caractérisée en ce que** la paroi de séparation (9, 9a.. 9c) est réalisée en plusieurs parties et au moins deux parties de paroi de séparation (9a.. 9c) dans l'armoire électrique (1a.. 1c) sont agencées à distance l'une de l'autre de sorte qu'une fente (10) du type mentionné en résulte.

7. Armoire électrique (1a.. 1c) selon la revendication 6, **caractérisée en ce que** la paroi de séparation métallique (9, 9a.. 9c) présente des trous allongés (12) qui sont agencés transversalement à ladite fente (10), et la paroi de séparation métallique (9, 9a.. 9c) est montée sur un cadre (2) de l'armoire électrique (1a.. 1c) à l'aide de vis.

8. Armoire électrique (1a.. 1c) selon l'une quelconque des revendications 1 à 7, **caractérisée en ce que** des antennes de transmission radio sont agencées à l'intérieur de la seconde zone (B) exclusivement dans ou sur les capteurs (8).

9. Armoire électrique (1a.. 1c) selon la revendication 8, **caractérisée en ce que** les antennes de transmission radio sont agencées à l'intérieur de l'armoire électrique (1a.. 1c) exclusivement dans ou sur les capteurs (8) et dans ou sur la station de base (7).

10. Armoire électrique (1a.. 1c) selon l'une des revendications 1 à 9, **caractérisée en ce que** la première zone (A) est associée à un premier compartiment d'armoire électrique, essentiellement rectangulaire, et la seconde région (B) à un second compartiment d'armoire électrique sensiblement rectangulaire, et le second compartiment d'armoire est aligné dans une direction horizontale par rapport au premier compartiment d'armoire.

11. Armoire électrique (1a.. 1c) selon la revendication 10, **caractérisée en ce que** la fente (10) s'étend sur au moins 80 % de la largeur et/ou de la hauteur d'une zone de liaison entre la première zone (A) et la seconde zone (B).
